# EUROPÄISCHE PATENTANMELDUNG

(11) **EP 1 168 258 A1**
(43) Veröffentlichungstag der Anmeldung: **02.01.2002**
(21) Anmeldenummer: 00127404.2
(22) Anmeldetag: 14.12.2000
(51) Int. Cl.: G07F 7/08, G07B 15/02

(54) **Verfahren und Vorrichtung zum kontaktlosen Erteilen einer Benutzungserlaubnis für Fahrzeuge**

(30) Priorität: 01.07.2000 DE 10032093
(71) Anmelder: Trend Network AG, 40210 Düsseldorf (DE)
(72) Erfinder: Möller, Michael, 40625 Düsseldorf (DE); Schäffer, Christian, 86343 Königsbrunn (DE)
(74) Vertreter: Cohausz & Florack

(57) **Zusammenfassung**

Die Erfindung betrifft ein Verfahren und eine Vorrichtung zum kontaktlosen Erteilen einer Benutzungserlaubnis für die Nutzung eines Fahrzeuges des öffentlichen Personenverkehrs, bei dem das technische Problem, neben einem automatischen Erfassen der Nutzungsberechtigung auch eine Kontrollmöglichkeit zu schaffen, gelöst ist durch ein Verfahren, bei dem vom Fahrgast eine Chipkarte verwendet wird, auf der abrufbare Informationen bezüglich der Benutzungserlaubnis gespeichert sind, bei dem innerhalb des Fahrzeuges mit Hilfe eines Sensorsystem die auf der Chipkarte gespeicherten Benutzerinformationen kontaktlos abgerufen werden, bei dem von einem Computer die abgerufenen Benutzerinformationen ausgewertet werden und festgestellt wird, ob eine Benutzungserlaubnis erteilt werden kann, und bei dem je nach dem Ergebnis der Entscheidung mit Hilfe des Sensorsystems eine abrufbare Erlaubnisinformation auf der Chipkarte gespeichert wird, die das Vorliegen einer Benutzungserlaubnis kennzeichnet.

Die Erfindung betrifft auch ein System zur Durchführung des Verfahrens.

## Beschreibung

Die Erfindung betrifft ein Verfahren und eine Vorrichtung zum kontaktlosen Erteilen einer Benutzungserlaubnis für die Nutzung eines Fahrzeuges des öffentlichen Personenverkehrs.

Derartige Verfahren und Vorrichtungen sind aus dem Stand der Technik bekannt, bei denen Chipkarten verwendet werden, auf denen Benutzerinformationen in Form einer Benutzeridentifizierung gespeichert werden. Betritt eine Person mit einer derartigen Chipkarte ein Fahrzeug des öffentlichen Verkehrs, so wird diese Benutzerinformation vom Sensorsystem erfaßt und ein Geldbetrag wird auf dem Computer abgespeichert. Zu einem späteren Zeitpunkt wird dann die Summe aller Beträge einer Person von einem Bankkonto abgebucht.

Durch dieses Verfahren ist zwar ein genaues Erfassen der Nutzungsentgelte der einzelnen Personen möglich, jedoch besteht keine definierte Möglichkeit der Überprüfung durch bspw. einen Kontrolleur, da dieser nicht in den Computer Einblick hat und feststellen kann, ob der Benutzer tatsächlich das Entgelt entrichtet hat.

Der Erfindung liegt daher das technische Problem zugrunde, ein Verfahren und eine Vorrichtung anzugeben, mit denen neben einem automatischen Erfassen der Nutzungsberechtigung auch eine Kontrollmöglichkeit geschaffen wird.

Das zuvor aufgezeigte technische Problem wird erfindungsgemäß durch ein Verfahren nach Anspruch 1 gelöst, bei dem vom Fahrgast eine Chipkarte verwendet wird, auf der abrufbare Informationen bezüglich der Benutzungserlaubnis gespeichert sind, bei dem innerhalb des Fahrzeuges mit Hilfe eines Sensorsystems die auf der Chipkarte gespeicherten Benutzerinformationen kontaktlos abgerufen werden, bei dem von einem Computer die abgerufenen Benutzerinformationen ausgewertet werden und festgestellt wird, ob eine Benutzungserlaubnis erteilt werden kann, und bei dem je nach dem Ergebnis der Entscheidung mit Hilfe des Sensorsystems eine abrufbare Erlaubnisinformation auf der Chipkarte gespeichert wird, die das Vorliegen einer Benutzungserlaubnis kennzeichnet.

Erfindungsgemäß ist daher erkannt worden, daß die Kontrollmöglichkeit dadurch geschaffen werden kann, daß auf der Chipkarte selbst durch das Sensorsystem eine Information gespeichert wird, die von einem Kontrolleur erfaßt und ausgewertet werden kann. Der Kontrolleur ist somit in der Lage, unabhängig von der Kenntnis, ob eine Einmalbenutzungserlaubnis, eine entfernungs- oder zeitabhängige Benutzungserlaubnis oder eine Dauerbenutzungserlaubnis vorliegt, das Vorliegen einer Benutzungserlaubnis an sich festzustellen. Somit kann ein geschlossenes elektronisches System eingeführt werden, bei dem die Fahrgäste einen Fahrschein vorzeigen müssen, wodurch ein unerlaubtes Fahren ohne Fahrschein beeinträchtigt wird.

Weiterhin ist es bevorzugt, daß beim Eintritt in das Fahrzeug oder in einem Zugangsbereich einer Haltestelle des Fahrzeuges dem Benutzer angezeigt wird, ob eine Benutzungserlaubnis auf der Chipkarte gespeichert wird oder nicht. Dadurch erlangt der Benutzer die Gewißheit, eine gültige Erlaubnis erhalten zu haben. Andererseits wäre eine Kontrolle durch den Benutzer nicht oder nur mit weiteren technischen Mitteln möglich.

Weiter ist es bevorzugt, daß dem Benutzer mittels einer mechanischen Vorrichtung der Zutritt verweigert wird, wenn keine Benutzungserlaubnis festgestellt werden kann. Somit kann nicht nur eine Kontrolle der Benutzungsberechtigung, sondern auch ein tatsächlicher Ausschluß des Benutzers von der Benutzung des Fahrzeuges erreicht werden. Dieses gilt insbesondere bei den Verkehrssystemen, bei denen der Zugangsbereich zu den Fahrzeugen und nicht der tatsächliche Eintritt in das Fahrzeug durch das Sensorsystem überwacht wird.

Weiterhin kann eine Kontrolle der Benutzungserlaubnis durch Auslesen der Erlaubnisinformation von der Chipkarte durchgeführt werden. Der Kontrolleur verwendet dazu ein Kartenlesegerät, mit dem zumindest die - positive oder negative - Erlaubnisinformation von der Chipkarte des Benutzers ausgelesen werden kann.

Weiterhin gibt es eine Reihe von Möglichkeiten, welche Benutzerinformationen auf der Chipkarte gespeichert werden und in welcher Weise die Benutzungserlaubnis ermittelt und abgespeichert wird und ggf. die Fahrpreisabrechnung erfolgt.

In einer bevorzugten Weise wird zunächst auf der Chipkarte als Benutzerinformation eine Benutzeridentifizierung und elektronisches Geld gespeichert. Die Benutzeridentifizierung dient dazu, daß der Benutzer als zur Benutzung des Systems berechtigt erkannt wird. Das elektronische Geld dient dazu, daß direkt von der Karte der Fahrpreis abgebucht werden kann, wie nachfolgend beschrieben wird. Beim Einstieg in das Fahrzeug oder beim Betreten des Zugangsbereiches einer Haltestelle des Fahrzeuges werden dann mittels des Sensorsystems die Erlaubnisinformation und der Einstiegsort auf der Chipkarte gespeichert. Beim Ausstieg aus dem Fahrzeug oder beim Verlassen des Ausgangsbereiches einer Haltestelle des Fahrzeuges wird schließlich der Ausstiegsort bestimmt und der entfernungsabhängige Fahrpreis wird von elektronisch auf der Chipkarte gespeichertem Geld abgebucht. Dieses Verfahren hat den Vorteil, daß die Benutzung des Fahrzeuges abhängig von der Länge der gefahrenen Strecke abgerechnet wird und gleichzeitig automatisch eine Benutzungserlaubnis erteilt wird. Darüber hinaus braucht der Fahrgast nicht das genaue Preissystem zu kennen, da der Fahrpreis automatisch berechnet und abgebucht wird.

Bei einer weiteren bevorzugten Vorgehensweise wird zunächst auf der Chipkarte als Benutzerinformation eine Benutzeridentifizierung und elektronisches Geld gespeichert wird, wie zuvor beschrieben worden ist. Beim Einstieg in das Fahrzeug oder beim Betreten des Zugangsbereiches einer Haltestelle des Fahrzeuges werden dann die Erlaubnisinformation und die Einstiegszeit auf der Chipkarte gespeichert. Beim Ausstieg aus dem Fahrzeug oder beim Verlassen des Ausgangsbereiches einer Haltestelle des Fahrzeuges wird die Ausstiegszeit bestimmt und der zeitabhängige Fahrpreis wird von elektronisch auf der Chipkarte gespeichertem Geld abgebucht. Dieses Verfahren hat den Vorteil, daß die Benutzung des Fahrzeuges abhängig von der Zeitdauer der gefahrenen Strecke abgerechnet wird und gleichzeitig automatisch eine Benutzungserlaubnis erteilt wird.

Bei beiden zuvor beschriebenen Vorgehensweisen kann in vorteilhafter Weise zusammen mit der Benutzeridentifizierung die Bankverbindung des Benutzers gespeichert sein, so daß statt einem Abbuchen von elektronisch gespeichertem Geld ein Abbuchungsauftrag bei der entsprechenden Bank veranlaßt wird.

Bei im voraus entrichteten Entgelten kann das zuvor erläuterte erfindungsgemäße Verfahren auch so angewendet werden, daß beispielsweise über einen Monat lang die Fahrtzeit und/oder Fahrthäufigkeit aufaddiert wird und daß erst am Ende dieses Zeitraumes der zugrundeliegende Tarif berechnet und abgebucht wird. Daneben kann auch bereits elektronisch abgebuchtes Geld zurückbezahlt werden.

Die zuvor beschriebenen Varianten des erfindungsgemäßen Verfahrens können hauptsächlich bei überregionalen Bahnen eingesetzt werden. Die nachfolgend beschriebenen Ausgestaltungen der Erfindung beziehen sich dagegen hauptsächlich auf den Personennahverkehr.

In bevorzugter Weise läßt sich das erfindungsgemäße Verfahren dahingehend erweitern, daß auf der Chipkarte als Benutzerinformation gespeichert wird, für welchen Zeitraum und/oder für welche vorgegebene Region der Benutzer eine Erlaubnis gekauft hat. Mit anderen Worten wird festgehalten, ob der Benutzer eine Dauerkarte, bspw. eine Monatskarte erworben hat. Ebenso sind Tageskarten oder auch Dreitageskarten üblich. Diese lassen sich neben einer zeitlichen Beschränkung auch auf einen vorgegebenen räumlichen Bereich beschränken, so daß auch diese Information abgespeichert werden kann. Wird dann beim Einstieg des Benutzers in ein Fahrzeug oder beim Betreten des Zugangsbereiches einer Haltestelle des Fahrzeuges festgestellt, daß dieser zu dem aktuellen Zeitpunkt und an dem Ort berechtigt ist, das Fahrzeug zu benutzen, dann wird vom Sensorsystem erfindungsgemäß die Erlaubnisinformation auf der Chipkarte gespeichert.

Alternativ dazu wird die zuvor beschriebene Vorgehensweise so durchgeführt, daß auf der Chipkarte als Benutzerinformation nur eine Benutzeridentifizierung gespeichert wird und daß vom Computer anhand der Benutzeridentifizierung mittels gespeicherter Benutzerdaten die Erlaubnis überprüft wird. In diesem Fall sind dann weniger Daten auf der Chipkarte zu speichern.

Bei den zuvor beschriebenen Varianten des erfindungsgemäßen Verfahrens wird auf der Chipkarte als Benutzerinformation elektronisches Geld gespeichert und es wird mit dem Speichern der abrufbaren Erlaubnisinformation ein entsprechender Geldbetrag von der Chipkarte abgebucht. Somit können zuvor beim Betreiber des Fahrzeuges eingezahlte Geldbeträge bargeldlos eingelöst werden.

In weiter bevorzugter Weise wird in jedem Ein- und Ausstiegsbereich des Fahrzeuges ein Sensorsystem angeordnet. Damit wird sichergestellt, daß jeder Benutzer sicher erfaßt wird und eine gültige Benutzungserlaubnis erhält.

Das oben aufgezeigte technische Problem wird auch durch eine Vorrichtung zum kontaktlosen Erteilen einer Benutzungserlaubnis für die Nutzung eines Fahrzeuges des öffentlichen Verkehrs gelöst, die geeignet ist, eines der zuvor beschriebenen Verfahren zu verwirklichen. Ein Ausführungsbeispiel dieser Vorrichtung wird im folgenden anhand der beigefügten Zeichnung näher erläutert. In der Zeichnung zeigen
- Fig. 1: eine erfindungsgemäße Vorrichtung zum kontaktlosen Erteilen einer Benutzungserlaubnis für die Nutzung eines Fahrzeuges des öffentlichen Verkehrs in einer schematischen Darstellung und
- Fig. 2: die Funktionsweise einer kontaktlosen Chipkarte.

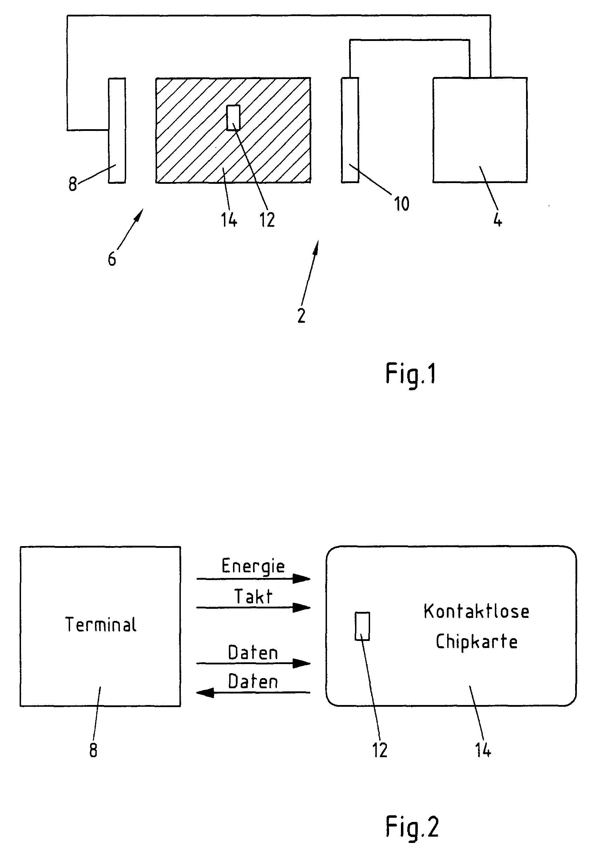

Die in Fig. 1 insgesamt mit 2 gekennzeichnete Vorrichtung weist einen Computer 4 und ein mit dem Computer 4 verbundenen Sensorsystem 6 auf, das aus zwei Transpondern 8 und 10 besteht. Gelangt eine schematisch mit einem Viereck dargestellte Chipkarte 12 in den schraffierten Erfassungsbereich 14 der Transponder 8 und 10, so können diese auf der Chipkarte 12 gespeicherte Benutzerinformationen abrufen.

Im Computer 4 werden die Benutzerinformationen ausgewertet und ggf. eine gültige Benutzungserlaubnis festgestellt. Die entsprechende Erlaubnisinformation wird dann von den Transpondern 8 und 10 auf der Chipkarte 12 gespeichert, noch bevor diese aus dem Erfassungsbereich 14 heraus gelangt.

Das zuvor beschriebene System kann einerseits in einem Eingangsbereich eines Fahrzeuges oder am Eingang eines Zugangsbereiches, bspw. innerhalb eines Bahnhofes, angeordnet sein.

Fig. 2 zeigt die Funktionsweise einer kontaktlosen Chipkarte 14 in ihrer Zusammenwirkung mit einem Terminal 8. Bei der kontaktlosen Chipkarte 14 befindet sich der Chip 12 im Inneren der Karte 14 und wird nicht vom Transponder 8 kontaktiert. Der Datenaustausch erfolgt im Prinzip über eine Funkverbindung, über die der Chip 12 während des Vorgangs gleichzeitig mit Energie versorgt wird. Die Übertragung der Signale erfolgt dabei von der Trägerfrequenz von beispielsweise 13,56 MHz. Daher müssen kontaktlose Chipkarten 14 für den Schreib- /Lesevorgang nicht in ein Lesegerät eingegeben werden. Im Gegenteil genügt es, die Chipkarte 14 an den Transponder 8 zu halten. Der Schreib- /Lesevorgang kann dann sehr schnell erfolgen. Dazu müssen sowohl die Versorgungsspannung bzw. Energie, der Takt sowie bidirektional die Daten ohne eine galvanische Kopplung über eine Luftschnittstelle übertragen werden. Die Kopplung basiert dabei auf einer kapazitiven und/oder induktiven Kopplung. In bevorzugter Weise wird die Energie über eine induktive Kopplung übertragen, während die Daten durch eine kapazitive Kopplung übermittelt werden. Daneben sind auch optische Übertragungen sowie mit Hilfe von Mikrowellenstrahlung möglich.

Generell befindet sich in der kontaktlosen Chipkarte 14 der Chip 12 sowie eine nicht detailliert dargestellte Antenne. Der Chip 12 liegt dabei geschützt im Inneren der Chipkarte 14 und ist von außen nicht zugänglich. Für eine kapazitive Kopplung sind leitende Flächen im Material des Körpers der Chipkarte 14 untergebracht, die als Kondensatorplatten wirken und eine nutzbare Koppelkapazität im Bereich von einigen 10 pF haben. Für eine induktive Kopplung zwischen der Chipkarte 14 und der Antenne eines zugehörigen Transponders 8 befindet sich im inneren der Chipkarte 14 eine großflächige Spule aus mehreren Windungen Draht. Hält man dann die kontaktlose Chipkarte 14 in die Nähe der Leseantenne des Transponders 8, so wird durch das Feld der Leseantenne eine Spannung in der Spule der Chipkarte 14 erzeugt. Diese wird gleichgerichtet und dient dann als Spannungsversorgung der kontaktlosen Chipkarte. Eine eigene Batterie wird somit in der kontaktlosen Chipkarte 14 nicht benötigt.

Die Datenübertragung vom Transponder 8 auf die kontaktlose Chipkarte 14 (Downlink) erfolgt bei einer einfachen Ausführungsform durch eine Amplitudentastung, also durch ein Ein- und Ausschalten des hochfrequenten Magnetfeldes der Antenne des Transponders 8. Durch Gleichrichten der in der Spule der Chipkarte 14 induzierten Spannung können dann die aufmodulierten Signale demoduliert und gespeichert werden. Bei der umgekehrten Datenübertragung von der Chipkarte 14 zum Transponder 8 (Uplink) wird die Eigenschaft der transformatorischen Kopplung zwischen der Antenne des Transponders 8 und der Chipkartenspule zu Nutze gemacht. Denn eine Änderung des Stromes in der sekundären Spule der kontaktlosen Chipkarte 14 bewirkt auch eine Änderung des Stromes bzw. der Spannung an der primären Spule des Transponders 8. Diese Spannungsänderung an der Antenne des Transponders 8 entspricht dann einer Amplitudenmodulation, die im Transponder ausgewertet werden kann. Somit lassen sich sowohl Daten auf dem Kartenchip speichern als auch von diesem wieder auslesen. Die genauen angewendeten Modulations- und Demodulationsverfahren werden dann die jeweiligen Gegebenheiten angepaßt.

## Patentansprüche

1. Verfahren zum kontaktlosen Erteilen einer Benutzungserlaubnis für die Nutzung eines Fahrzeuges des öffentlichen Personenverkehrs,
- bei dem vom Fahrgast eine Chipkarte verwendet wird, auf der abrufbare Informationen bezüglich der Benutzungserlaubnis gespeichert sind,
- bei dem mit Hilfe eines Sensorsystem die auf der Chipkarte gespeicherten Benutzerinformationen kontaktlos abgerufen werden,
- bei dem von einem Computer die abgerufenen Benutzerinformationen ausgewertet werden und festgestellt wird, ob eine Benutzungserlaubnis erteilt werden kann, und
- bei dem je nach dem Ergebnis der Entscheidung mit Hilfe des Sensorsystems eine abrufbare Erlaubnisinformation auf der Chipkarte gespeichert wird, die das Vorliegen einer Benutzungserlaubnis kennzeichnet.

2. Verfahren nach Anspruch 1,
bei dem dem Benutzer beim Eintritt in das Fahrzeug oder beim Betreten eines Zugangsbereiches einer Haltestelle des Fahrzeuges angezeigt wird, ob eine Benutzungserlaubnis auf der Chipkarte gespeichert wird oder nicht.

3. Verfahren nach Anspruch 1 oder 2,
bei dem dem Benutzer mittels einer mechanischen Vorrichtung der Zutritt verweigert wird, wenn keine Benutzungserlaubnis festgestellt werden kann.

4. Verfahren nach einem der Ansprüche 1 bis 3,
bei dem eine Kontrolle der Benutzungserlaubnis durch Auslesen der Erlaubnisinformation von der Chipkarte durchgeführt wird.

5. Verfahren nach einem der Ansprüche 1 bis 4,
- bei dem auf der Chipkarte als Benutzerinformation eine Benutzeridentifizierung und elektronisches Geld gespeichert wird,
- bei dem beim Einstieg in das Fahrzeug oder beim Betreten eines Zugangsbereiches einer Haltestelle eines Fahrzeuges die Erlaubnisinformation und der Einstiegsort auf der Chipkarte gespeichert werden und
- bei dem beim Ausstieg oder beim Verlassen des Ausgangsbereiches der Haltestelle der Ausstiegsort bestimmt wird und der entfernungsabhängige Fahrpreis von der Chipkarte abgebucht wird.

6. Verfahren nach einem der Ansprüche 1 bis 4,
- bei dem auf der Chipkarte als Benutzerinformation eine Benutzeridentifizierung und elektronisches Geld gespeichert wird,
- bei dem beim Einstieg in das Fahrzeug oder beim Betreten eines Zugangsbereiches einer Haltestelle eines Fahrzeuges die Erlaubnisinformation und die Einstiegszeit auf der Chipkarte gespeichert werden und
- bei dem beim Ausstieg oder beim Verlassen des Ausgangsbereiches der Haltestelle die Ausstiegszeit bestimmt wird und der zeitabhängige Fahrpreis von der Chipkarte abgebucht wird.

7. Verfahren nach einem der Ansprüche 1 bis 4,
bei dem auf der Chipkarte als Benutzerinformation gespeichert wird, für welchen Zeitraum und/oder für welche vorgegebene Region der Benutzer eine Erlaubnis gekauft hat.

8. Verfahren nach einem der Ansprüche 1 bis 4,
bei dem auf der Chipkarte als Benutzerinformation eine Benutzeridentifizierung gespeichert wird und vom Computer anhand der Benutzeridentifizierung mittels gespeicherter Benutzerdaten die Erlaubnis überprüft wird.

9. Verfahren nach einem der Ansprüche 1 bis 4,
bei dem auf der Chipkarte als Benutzerinformation elektronisches Geld gespeichert ist und bei dem mit dem Speichern der abrufbaren Erlaubnisinformation ein entsprechender Geldbetrag von der Chipkarte abgebucht wird.

10. Vorrichtung zum kontaktlosen Erteilen einer Benutzungserlaubnis für die Nutzung eines Fahrzeuges des öffentlichen Verkehrs zur Durchführung eines Verfahrens nach einem der Ansprüche 1 bis 9,
- mit einem Computer (4) und
- mit mindestens einem mit dem Computer (4) verbundenen Sensorsystem (6) mit mindestens einem Transponder (8, 10) zum Abrufen von auf einer Chipkarte (12) gespeicherten Benutzerinformationen und zum Speichern von Erlaubnisinformationen auf der Chipkarte (12).

11. Vorrichtung nach Anspruch 10,
**dadurch gekennzeichnet,**
**daß** das Sensorsystem (6) innerhalb des Fahrzeuges angeordnet ist.

12. Vorrichtung nach Anspruch 10,
**dadurch gekennzeichnet,**
**daß** das Sensorsystem (6) im Zugangsbereich zu dem Fahrzeug angeordnet ist.
